# EUROPÄISCHE PATENTSCHRIFT

(11) **EP 1 315 781 B1**
(45) Veröffentlichungstag und Bekanntmachung des Hinweises auf die Patenterteilung: **26.01.2005**
(21) Anmeldenummer: 01969618.6
(22) Anmeldetag: 21.08.2001
(51) Int. Cl.: C09J 7/04

(54) **VERFAHREN ZUR UMMANTELUNG VON LANGGESTRECKTEM GUT, WIE INSBESONDERE KABELSÄTZEN, MIT EINEM KLEBEBAND**
METHOD FOR COVERING AN ELONGATED ELEMENT, ESPECIALLY A LOOM OF CABLES, WITH AN ADHESIVE STRIP
PROCEDE PERMETTANT D'ENVELOPPER UN ELEMENT ALLONGE, EN PARTICULIER UN FAISCEAU DE CABLES, A L'AIDE D'UNE BANDE ADHESIVE

(30) Priorität: 31.08.2000 DE 10042732
(43) Veröffentlichungstag der Anmeldung: 04.06.2003
(73) Patentinhaber: tesa AG, 20253 Hamburg (DE)
(72) Erfinder: MUSAHL, Esther, 77654 Offenburg (DE); VON SAMSON-HIMMELSTJERNA, Matthias, 24558 Henstedt-Ulzburg (DE)
(86) Internationale Anmeldenummer: PCT/EP2001/009597
(87) Internationale Veröffentlichungsnummer: WO 2002/018509

(56) Entgegenhaltungen:
- EP-A- 0 455 212
- DE-A- 19 732 958
- US-A- 5 278 356

## Beschreibung

Die Erfindung bezieht sich auf ein Verfahren zum Ummantelung von langgestrecktem Gut, wie insbesondere Kabelsätzen, mit einem Klebeband.

Die Verwendung von Klebebändern mit einem Vlies als Träger zur Bandagierung von Kabelbäumen ist bekannt. So beschreibt die DE-G 94 01 037 ein Klebeband mit einem bandförmigen, textilen Träger, der aus einem Nähvlies besteht, das seinerseits aus einer aus einer Vielzahl parallel zueinander laufender, eingenähter Nähte gebildet wird. Das beschriebene Klebeband zeigt bei seiner Verwendung zur Kabelbaumbandagierung aufgrund seiner speziellen Ausführung Geräuschdämmungseigenschaften.

Neben dem in der genannten Schrift erwähnten Nähvlies gibt es weitere Träger, die in Klebebändem zur Kabelbaumbandagierung eingesetzt werden.
Die DE 44 42 092 beschreibt solch ein Klebeband auf Nähvliesbasis, das auf der Trägerrückseite beschichtet ist. Der DE 44 42 093 liegt die Verwendung eines Vlieses als Träger für ein Klebeband zugrunde, das durch die Bildung von Maschen aus den Fasem des Vlieses verstärktes Querfaservlies entsteht, also ein dem Fachmann unter dem Namen Malivlies bekanntes Vlies. Die DE 44 42 507 offenbart ein Klebeband zur Kabelbandagierung, jedoch basiert es auf sogenannten Kunit- beziehungsweise Multiknitvliesen.

Aus der DE 195 23 494 C1 ist die Verwendung eines Klebebandes mit einem Träger aus Vliesmaterial zum Bandagieren von Kabelbäumen bekannt, das einseitig mit einem Kleber beschichtet ist. Bei dem erfindungsgemäß zum Einsatz kommenden Vlies handelt es sich um ein Spinnvlies aus Polypropylen, das mit Hilfe eines Kalanders thermisch verfestigt und geprägt ist, wobei die Prägewalze eine Prägefläche von 10 % bis 30 %, bevorzugt 19 %, aufweist.

Mit der DE 298 04 431 U1 wird ebenfalls die Verwendung eines Klebebandes mit einem Träger aus Vliesmaterial zum Bandagieren von Kabelbäumen offenbart, wobei das vorgeschlagene Spinnvlies aus Polyester besteht

Aus der DE 298 19 014 U1 sind Klebebänder auf Basis eines mit Luft- und/oder Wasserstrahlen verfestigten Vliesen bekannt.

Aus der DE 199 23 399 ist ein Klebeband mit einem bandförmigen Träger aus Vliesmaterial bekannt, das zumindest einseitig mit einem Kleber beschichtet ist, wobei das Vlies ein Stapelfaservlies darstellt, das durch mechanische Bearbeitung verfestigt oder naßgelegt wird. Zwischen 2% und 50% der Fasern des Vlieses sind Schmelzfasern, und zwar solche aus Homo-, Copolymer- oder Bikomponentenfasem mit einem niedrigeren Erweichungs- oder Schmelzpunkt.
Beispielhaft erwähnt ist, daß die Schmelzfasem des Vlieses aus Polypropylen, Polyethylen, Polyamid, Polyester oder Copolymeren bestehen.

Ein weiteres Klebeband mit einem bandförmigen Träger aus Vliesmaterial ist in der DE 199 37 446 offenbart. Das Klebeband ist zumindest einseitig mit einem Kleber beschichtet, wobei das Vlies ein Stapelfaservlies darstellt, das durch mechanische Bearbeitung verfestigt oder naßgelegt wird. Hier erfolgt die weitere Verfestigung des Stapelfaservlieses durch Zugabe von Bindemitteln, wie zum Beispiel Pulver, Folien, Gittemetze, Bindefasern. Die Bindemittel können in Wasser oder organischen Lösemittel gelöst sein und/oder als Dispersion vorliegen.
Vorzugsweise kommen die Bindemittel als Bindedispersion wie Elastomere oder wie Duroplaste in Form von Phenol- oder Melaminharzdispersionen, als Dispersion natürlicher oder synthetischer Kautschuke oder als Dispersion von Thermoplasten wie Acrylate, Vinylacetate, Polyurethane, Styrol-Butadien-Systeme, PVC sowie deren Copolymere zum Einsatz.

In WO 99/24518 A1 wird ein Klebeband beschrieben, wobei das Trägermaterial ein Vlies ist, das erst durch die spezifische Auswahl von Fasern oder Filamenten mit einer Feinheit von größer 15 denier sowie durch eine zusätzlich aufextrudierte Folienschicht eine Eignung für die Verwendung von Klebebändern findet.

Mit der DE 197 32 958 A1 ist ein Klebeband zum Ummanteln von langgestrecktem Gut, wie Kabelsätzen oder Kunststoffprofilen, offenbart mit einem durch zwei seitliche Kanten begrenzten bandförmigen Träger, der mindestens auf einer Seite mit einer selbstklebenden Klebeschicht versehen ist, die aus einem Haftklebstoff besteht. Der Haftklebstoff weist eine derartige chemische Zusammensetzung auf, daß sich bei Vorhandensein eines leichten Anpreßdruckes auf zwei aufeinander liegende Klebeschichten unter Auflösung der Grenzflächen und vollständiger Koaleszenz der Klebeschichten eine homogene Haftklebstoff-Masse bildet.
Des weiteren umfaßt die hier dargestellte Erfindung ein Verfahren zum Ummanteln des langgestreckten Gutes. Danach wird das langgestreckte Gut in Längsrichtung im Bereich eines Abschnittes des Klebebandes auf einer mit einer selbstklebenden Klebeschicht versehenen Seite eines bandförmigen Trägers des Klebebandes positioniert und danach das Klebeband derart verklebt, daß mindestens zwei Klebebereiche des bandförmigen Trägers auf der mit der Klebeschicht versehenen Seite derart gegeneinander geklebt werden, daß unter Auflösung von Grenzflächen der Klebeschicht eine homogene Masse entsteht.
Es ergibt sich somit ein aus dem ummantelten Gut herausragendes Fähnchen, das gerade bei den eng bemessenen Platzverhältnissen im Automobilbau äußert unerwünscht ist und das Gefährdungspotential beinhaltet, daß beim Durchziehen des Kabelsatzes durch begrenzte Öffnungen oder Durchführungen zum Beispiel in der Karosserie die Ummantelung hängen bleibt und abreißt, zumindest aber die Umhüllung beschädigt. Dies gilt es zu vermeiden.

In EP 1 000 992 A1 wird ein gelochtes Baumwolle-Vlies mit einer 10 bis 45 µm dicken Polyethylenbeschichtung sowie einer zusätzlichen Releasebeschichtung beschrieben.

Die DE 20 52 271 A1 offenbart ein Verfahren zum Ummanteln von Kabelsätzen mit einem Klebeband, das in einer spiralförmigen Bewegung um das langgestreckte Gut geführt wird. Auf einer Seite des Trägermaterials des Klebebands ist die Klebemasse in Längsrichtung in Form eines Streifens aufgebracht ist, der eine geringere Breite aufweist als das Trägermaterial des Klebebands.
Nicht entnommen werden kann, wie das Klebeband auszugestalten ist, um die vielfältigen Aufgaben zu erfüllen, die an ein Klebeband in einem solchen Einsatzfall gestellt werden. Es ist kein Beispiel angegeben, aus dem hervorgeht, welcher Art das Trägermaterial sein könnte. Selbiges gilt für die Klebemasse.

Der vorliegenden Erfindung liegt die Aufgabe zugrunde, ein Verfahren zur Verfügung zu stellen, das die besonders einfache, preiswerte und schnelle Ummantelung von langgestrecktem Gut ermöglicht, so daß die Nachteile des Standes der Technik nicht oder zumindest nicht in dem Umfang auftreten.

Gelöst wird diese Aufgabe durch ein Verfahren, wie es im Hauptanspruch niedergelegt ist. Gegenstand der Unteransprüche sind dabei vorteilhafte Weiterbildungen des Verfahrens sowie ein nach dem erfindungsgemäßen Verfahren ummantelter Kabelbaum.

Demgemäß betrifft die Erfindung Verfahren zum Ummanteln von langgestrecktem Gut, wie insbesondere Kabelsätzen, mit einem Klebeband, das in einer spiralförmigen Bewegung um das langgestreckte Gut geführt wird. Zumindest auf einer Seite des Trägermaterials des Klebebands ist die Klebemasse in Längsrichtung in Form eines Streifens aufgebracht, der eine geringere Breite aufweist als das Trägermaterial des Klebebands. Das Trägermaterial ist ein textiler Träger, ein Laminat oder ein Folie, und die Klebemasse ist ein Acrylatsystem.
In einer ersten vorteilhaften Ausführungsform des Verfahrens wird das Klebeband so um das Gut geführt, daß bezogen auf die Mittelachse des Gutes die Klebemasse innenwärts liegt.

In einer weiteren vorteilhaften Ausführungsform des Verfahrens wird das Klebeband so um das Gut geführt, daß bezogen auf die Mittelachse des Gutes die Klebemasse außenwärts liegt.

In einer weiteren vorteilhaften Ausführungsform ist das Klebeband von beiden Trägerseiten mit Klebemasse beschichtet, wobei die Beschichtung jeweils nur auf einem Teil des Trägers erfolgt. Die Beschichtungen der beiden unterschiedlichen Seiten sind versetzt angebracht, das heißt, auf der einen Trägerseite befindet sich die Beschichtung an der rechten Kante, auf der gegenüberliegenden Seite befindet sich die Klebemasse an der linken Kante. Beim Umwickeln eines Kabelbaumes liegt dann die eine Klebefläche bezogen auf die Mittelachse des Guts außen, während die andere Klebefläche innen liegt. Bei der Umwicklung der nächsten Lage kleben dann ganz oder teilweise die äußere Klebefläche des untenliegenden Klebebandes und die innere Klebefläche des obenliegenden Klebebandes aufeinander.

Der beschichtete Streifen hat in einer vorteilhaften Ausführungsform eine Breite von 10 bis 80% der Breite des Trägermaterials, und zwar gewählt in Abhängigkeit von der Anwendung. Besonders vorzugsweise erfolgt der Einsatz von Streifen mit einer Beschichtung von 20 bis 50% der Breite des Trägermaterials.

Je nach Verwendungsfall können auch mehrere parallele Streifen des Klebers auf dem Trägermaterial beschichtet sein.

Durch die drei erfindungsgemäßen Arten, das Gut mittels eines Klebebands zu ummanteln, kann man erreichen, daß der Streifen der Klebemasse weitgehend vollständig auf dem Klebeband selbst verklebt. Bei der Variante mit Klebemasse innenwärts verkleben Gut und Klebemasse zu Beginn der Wicklung, durch diese Fixierung wird ein Verrutschen der Wicklung beim Wickeln verhindert. Bei der Variante mit Klebemasse außenwärts erfolgt weder mit dem Gut eine Verklebung noch liegt außen ein Stück der Klebemasse frei, an der sich Schmutz ansammeln könnte.

Erfolgt die Abdeckung der Klebemasse nicht zu 100%, ist es bei innenliegender Klebemasse möglich, einen Teil der Klebemasse auf dem Kabel zu verkleben, so daß der Kabelsatz gegen Verrutschen gesichert und dennoch flexibel gestaltet ist.
Bei außenliegender Klebemasse ist auf diese Weise möglich, einen Teil der Klebmasse von der nächsten Klebebandlage unbedeckt nach außen schauen zu lassen, um später eine Fixierung, zum Beispiel an Karosserieblechen, zu erreichen.

Als Trägermaterial für das Klebeband können alle bekannten textilen Träger wie Gewebe, Gewirke oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden.
Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.
Die durch die Partikelschicht hindurchgenadelten Haltefasem halten die Deckschicht und die Unterlagsschicht in einem Abstand voneinander und sie sind mit der Deckschicht und der Unterlagsschicht verbunden.
Abstandsgewebe oder -gewirke sind u. a. in zwei Artikeln beschrieben, und zwar
einem Artikel aus der Fachzeitschrift "kettenwirk-praxis 3/93", 1993, Seiten 59 bis 63
"Raschelgewirkte Abstandsgewirke"
und
einem Artikel aus der Fachzeitschrift "kettenwirk-praxis 1/94", 1994, Seiten 73 bis 76
"Raschelgewirkte Abstandsgewirke"
auf deren Inhalt hiermit Bezug genommen wird und deren Inhalt Teil dieser Offenbarung und Erfindung wird.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasem, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.
Schließlich sind auch Nähvliese als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Naßvlies ist, das hydrodynamisch gelegt wurde, wobei zwischen 2% und 50% der Fasern des Vlieses Schmelzfasern sind, insbesondere zwischen 5% und 40% der Fasern des Vlieses.

Ein derartiges Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vemähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasem nochmals erhöht wird.
Die Verfestigung des Vliesträgers läßt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Für die erfindungsgemäße Nutzung von Vliesen ist besonders die adhäsive Verfestigung von mechanisch vorverfestigten oder naßgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gittemetz oder in Form von Bindefasern, Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleibt, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozeßschritt erfolgen, wobei dieser inline oder off-line durchgeführt werden kann. Nach der Bindemittelzugabe muß temporär für das Bindemittel ein Zustand erzeugt werden, in dem dieses klebend wird und adhäsiv die Fasem verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat. Vorteilhaft ist, daß durch thermische Behandlung flüchtige Komponenten wie Faserhilfsstoffe entfernt werden und somit ein Vlies mit günstigen Foggingwerten entsteht, so daß bei Einsatz einer foggingarmen Klebemasse ein Klebeband mit besonders günstigen Foggingwerten produziert werden kann.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Als Ausgangsmaterialien für den textilen Träger sind insbesondere Polyester-, Polypropylen-, Viskose- oder Baumwollfasem vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Zur Ummantelung des langgestreckten Gutes eignet sich allerdings auch ein Trägermaterial, das aus Papier, aus einem Laminat, aus einer Folie (zum Beispiel PP, PE, PET, PA), aus Schaumstoff oder aus einer geschäumten Folie besteht.

Eine Schwerentflammbarkeit der Klebebänder läßt sich erzielen, indem dem (Vlies)Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Das Trägermaterial wird zur Herstellung von Klebebändern insbesondere einseitig in Längsrichtung mit einem Streifen an Klebemasse beschichtet, wobei die Beschichtungstechnologien sowie die Klebemassen dem Stand der Technik entsprechen. Möglich ist auch, daß ein beschichtetes Klebeband auf einen unbeschichteten Träger auflaminiert wird.
Im Fall des beidseitig klebenden Bandes können auch zwei beschichtete Klebebänder derartig aufeinander laminiert werden, daß die Klebemasse auf Klebemasse verklebt. In diesem Fall zeigt die eine Klebmassenseite nach oben, die andere nach unten.

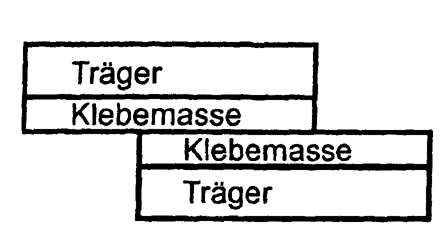

In der obigen Abbildung ist gezeigt, wie ein besonders vorteilhaftes Klebeband entsteht, nämlich, indem die Klebemasseseiten zweier einseitig insbesondere vollflächig beschichteter Klebebänder mit Versatz aufeinaderlaminiert werden. Der Versatz beträgt vorzugsweise unter 50%, besonders bevorzugt zwischen 20 und 30 %.

Als Klebemassen haben sich Acrylatsysteme als vorteilhaft erwiesen.

Insbesondere vorteilhaft für den erfindungsgemäßen Gedanken ist ein foggingfreies Selbstklebeband, umfassend einen foggingfreien Träger auf den zumindest einseitig eine foggingfreie, druckempfindliche Klebemasse aufgetragen ist.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der deutschen Patentanmeldung DE 43 13 008 C2 dargelegt. Diesen auf diesem Wege hergestellten Acrylatmassen wird in einem Zwischenschritt das Lösungsmittel vollständig entzogen.

Der K-Wert wird dabei insbesondere bestimmt in Analogie zu DIN 53 726.

Zusätzlich werden dabei weitere leichtflüchtige Bestanteile entfernt Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578151 A beschrieben.

Die Klebemasse auf Acrylathotmelt-Basis kann UV-vemetzt werden. Andere Vernetzungsarten sind aber auch möglich, zum Beispiel die Elektronenstrahlenvemetzung.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Besonders aufgrund der geringen Dicken des Trägermaterials eignen sich direkte Beschichtungsverfahren, die nahezu drucklos und gegebenenfalls berührungslos die Klebemasse auf den Träger auflegen, oder aber indirekte Beschichtungsverfahren.

Dadurch wird nicht nur verhindert, daß Klebemasse in den insbesondere textilen Träger hineingedrückt wird und somit für die späteren Verklebungsanforderungen nutzlos vergeudet wäre, sondern auch erreicht, daß die offene, textile Struktur für gute Dämpfungseigenschaften nicht oder nur minimal verändert wird.

Zu nennen wären hier beispielweise neben der Transferierung der Klebemasse von Silikontrennpapier auch die Übertragung über andere temporäre Transfermedien wie Gurtbänder u.ä. sowie drucklose Kleberbeschichtung mittels Extrusionsdüsen u. ä., bei denen ein fertiger Film aus Klebemasse auf dem Träger aufgelegt wird. Eine gegebenenfalls notwendige Verbesserung der Verankerung der Klebemasse auf dem Träger kann nach erfolgter Kleberbeschichtung durch Temperatur- und/oder Druckanwendung zum Beispiel in Kaschierstationen erreicht werden.

Ein mögliches indirektes Verfahren zur Herstellung eines mit einer porösen Klebstoffschicht beschichteten flexiblen, flächigen Trägers wird in der DE 40 32 776 A1 offenbart.
Danach
a) wird eine fließfähige Klebstoffmasse auf einen Zwischenträger aufgetragen, der folgende Eigenschaften aufweist:
   - er hat eine unter dem Licht- oder Elektronenmikroskop erkennbare gewellte, gefältelte zerklüftete oder gefurchte Oberfläche
   - die Klebstoffmasse ist von seiner Oberfläche leicht ablösbar,
   - er ist im wesentlichen luftundurchlässig,
b) werden die nach der Beschichtung des Zwischenträgers zwischen der Klebstoffmasse und dem Zwischenträger entstehenden mikroskopischen Luft- oder Lösungsmitteleinschlüsse durch Temperaturerhöhung ausgedehnt, bis die Oberfläche der Klebstoffmasse aufplatzt, und
c) wird die Klebstoffmasse anschließend von dem Zwischenträger auf den endgültigen Träger übertragen.

Anders als zu der in der DE 40 32 776 A1 angestrebten porösen Kleberbeschichtung ist für den Erfindungsgegenstand eine möglichst homogene, glatte, luftfreie und undurchlässige Kleberbeschichtung von Vorteil. Wird anstelle der oben beschriebenen strukturierten Oberfläche jedoch eine glatte und homogene Oberfläche des Zwischenträgers gewählt, lassen sich diese Anforderungen erfüllen.

Der Grundkörper für die Zwischenträger kann aus allen gängigen Materialien für solche Zwecke gewählt werden. Besonders vorteilhaft sind gewebte Gurtbänder aus Glasfaser, Polyester, Polyamid oder Nomex®, einem Fasermaterial der Firma DuPont. Aber auch Gummitücher, Kunststoffbänder und dergleichen haben sich als günstig herausgestellt. Es ist, wenn Gewebebänder gewählt werden, günstig, solche zu verwenden, die schon mit einer im wesentlichen unstrukturierten Oberflächenbeschichtung aus Kunststoff versehen sind. Diese letztere Beschichtung fördert die Haftung und Gleichmäßigkeit der eigentlichen Oberflächenbeschichtung auf dem Grundkörper. Die Oberflächenbeschichtung selbst stellt das gewünschte leichte Übertragen der Klebestoffmasse von dem Zwischenträger auf den endgültigen Träger sicher. Vorteilhaft ist diese Oberfläche des Zwischenträgers mit einer antiadhäsiven Schicht beispielsweise aus vemetztem Silikonkautschuk oder Fluorpolymeren wie Teflon® beschichtet.

Als besonders vorteilhaft erweist sich eine derartige Beschichtung, wenn der erreichte Zustand mit chemischen oder physikalischen Methoden quasi eingefroren und ein "kaltes Fließen" der Klebemasse in den Träger durch Vernetzung verhindert wird. So sind beispielsweise die UV-vemetzbaren Acrylat-Hotmelts, wie sie von der BASF unter der Handelsbezeichnung acResin© angeboten werden, besonders für derartige Anforderungen geeignet: nach der Beschichtung erfolgt eine dreidimensionale Vernetzung mittels UV-Strahlung. Je nach gewähltem Klebemassetyp können jedoch auch andere Vemetzungsarten vorteilhaft zum Einsatz kommen wie die chemische Vernetzung, thermisch initiierte sowie die strahlenchemische Vernetzung mittels Elektronenstrahlen oder andere bekannte Systeme.

In einer weiteren bevorzugten Ausführungsform der Erfindung wird die Kleberbeschichtung mit 25 bis 80 g/m², insbesondere 30 bis 50 g/m², drucklos oder indirekt in einem Streifen auf dem Träger aufgebracht und anschließend physikalisch oder chemisch vernetzt.

Schließlich umfaßt die Erfindung ein mit einem Klebeband ummanteltes langgestrecktes Gut, wie insbesondere ein Kabelsatz, wobei das Klebeband in einer spiralförmigen Bewegung um das langgestreckte Gut geführt ist, wobei auf einer Seite des Trägermaterials des Klebebands die Klebemasse in Längsrichtung in Form eines Streifens aufgebracht ist, der eine geringere Breite aufweist als das Trägermaterial des Klebebands, wobei die Ummantelung derartig erfolgt ist, daß der Streifen der Klebemasse weitgehend vollständig auf dem Klebeband selbst verklebt ist.

Das erfindungsgemäße Klebeband kann in festen Längen wie zum Beispiel als Meterware oder aber als Endlosware auf Rollen zur Verfügung gestellt werden. Für die Verwendung ist im letzteren Fall dann ein variables Ablängen durch Messer, Scheren oder Dispenser u.ä. möglich oder aber bei geeigneter Wahl der Materialien für die Klebebänder eine manuelle Verarbeitbarkeit ohne Hilfsmittel.
Zur Verklebung kommen insbesondere Streifen des Klebebands zum Einsatz, die eine Breite von 15 bis 50 mm aufweisen.

Durch die erfinderische Ummantelung des bevorzugten Kabelbaums ist dieser hervorragend geschützt und gegen Erschütterungen gedämpft.

Die erfindungsgemäße Lösung hat weiterhin die Vorteile, daß es sich um einen sauberen, fähnchenfreien Kabelbaum handelt, welcher einen guten Oberflächenschutz bietet, hohe Bündelungskraft und gute Geräuschdämpfung gewährleistet.

Durch den im Vergleich zur herkömmlichen Spiralwicklung geringeren Einsatz von Klebmasse reduziert sich das Fogging um den Anteil der eingesparten Klebemasse; ebenso vermindem sich die Probleme in der Verträglichkeit zwischen Klebemasse und Kabelummantelung, wie sie insbesondere bei PVC-freien Kabeln und nicht speziell geeigneten Klebemassen auftreten können, da bei der erfindungsgemäßen Spiralwicklung keine oder nur eine minimale Kontaktfläche Klebemasse zu Kabelisolierung auftritt.
Da die Umwicklung des Guts ohne beziehungsweise mit geringer Verklebung auf dem Gut erfolgt, bleibt des umwickelte Gut unter der Hülle flexibel und in der Lage leicht veränderbar.

Die Ausführungsform mit beidseitiger Klebebeschichtung hat zusätzlich den Vorteil, daß die Verklebung durch die Haftung von Klebmasse auf Klebmasse sehr stark ist. Dadurch kann der Klebmassenauftrag stark minimiert werden, was Vorteile im Bezug auf Kosten und Fogging mit sich bringt.

Im folgenden soll die Erfindung anhand mehrerer Figuren näher erläutert werden, ohne damit die Erfindung unnötig einschränken zu wollen.

Es zeigen
- Figur 1: einen Kabelbaum, der erfindungsgemäß ummantelt ist, wobei das Klebeband so um das Gut geführt wird, daß bezogen auf die Mittelachse des Gutes die Klebemasse innenwärts liegt und
- Figur 2: einen Kabelbaum, der erfindungsgemäß ummantelt ist, wobei das Klebeband so um das Gut geführt wird, daß bezogen auf die Mittelachse des Gutes die Klebemasse außenwärts liegt.
- Figur 3: einen Kabelbaum, der erfindungsgemäß ummantelt ist, wobei das Klebeband eine beidseitige schmale Beschichtung eines Klebers aufweist, und zwar derart, daß die eine Klebemasse an der einen Kante des Trägermaterial anliegt und auf der anderen Seite des Trägermaterials die Klebemasse an der gegenüberliegenden Kante angeordnet ist.

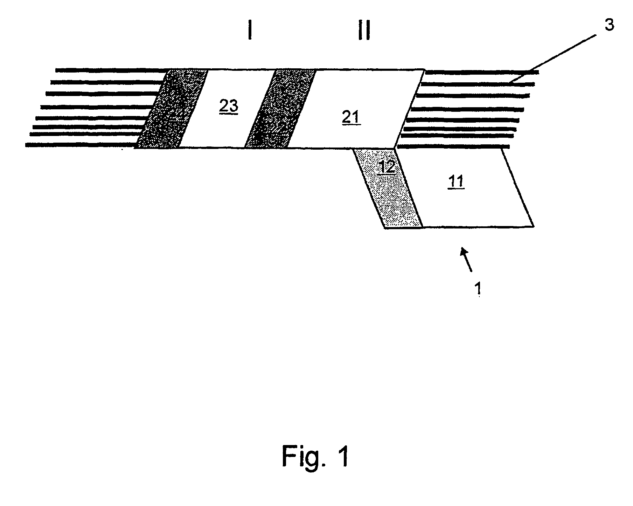

In der Figur 1 ist ein Ausschnitt eines Kabelbaums 3 gezeigt, der sich aus einer Bündelung von einzelnen Kabeln zusammensetzt und der erfindungsgemäß mit einem Klebeband 1 ummantelt ist. Das Klebeband 1 wird so um den Kabelbaum 3 geführt, daß bezogen auf die Mittelachse des Kabelbaums 3 die Klebemasse 12, 22, 24 innenwärts liegt.

Der gezeigte Ausschnitt des Kabelbaums 3 zeigt zwei Wicklungen I und II des Klebebands 1. Nach links hin würden sich würden weitere Wicklungen erstrecken, diese sind hier nicht dargestellt.
Das Trägermaterial 11, 21, 23 ist einseitig mit einer Klebemasse 12, 22, 24 beschichtet, wobei der Auftrag in Form eines Streifens in Längsrichtung erfolgt, der eine geringere Breite aufweist als das Trägermaterial 11, 21, 23 des Klebebands 1.
Die Ummantelung des Kabelbaums 3 erfolgt derartig, daß der Streifen der Klebemasse 12, 22, 24 vollständig auf dem Trägermaterial 11, 21, 23 des Klebeband 1 selbst verklebt. Eine Verklebung mit dem Kabelbaum 3 ist ausgeschlossen.
Das Klebeband 1 umfaßt (siehe Wicklung I) in der Breite den Abschnitt 24 und den Anschnitt 22 sowie den dazwischen befindlichen offenen Träger 23. Der Abschnitt 22, der zur Wicklung II gehört, haftet also auf dem Abschnitt 23. (Der Abschnitt 24 würde auf dem Träger der nächsten linksiiegenden Wicklung haften.) Die Abschnitte 22, 24 sind im Gegensatz zur offen liegenden Klebemasse 12 von außen nicht sichtbar, weshalb die dichtere Schraffur zur Darstellung gewählt ist.

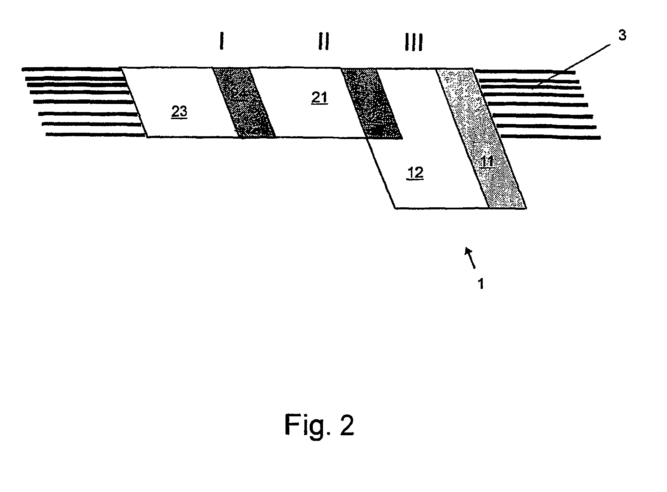

In der Figur 2 ist ebenfalls ein Ausschnitt eines Kabelbaums 3 gezeigt, der erfindungsgemäß mit einem Klebeband 1 ummantelt ist. Das Klebeband 1 wird hier so um den Kabelbaum 3 geführt, daß bezogen auf die Mittelachse des Kabelbaums 3 die Klebemasse 12, 22, 24 außenwärts liegt. Der Kabelbaum 3 kommt auf diese Weise nicht mit der Klebemasse 12, 22, 24 in Kontakt.
Auch hier würde sich die Ummantelung nach links hin fortsetzen. In Wicklung I liegt das Klebeband 1 mit der nicht beschichteten Rückseite um den Kabelbaum 3, der klebende Abschnitt 24 befindet sich rechts. Die Wicklung II wird nun so durchgeführt, daß der Abschnitt 24 vollständig vom Klebeband 1, uns zwar vom Abschnitt 21, abgedeckt wird. Bei der Wicklung III wird nun der Abschnitt 12 so aufgelegt, daß der Abschnitt 22 vollständig verdeckt ist. Auf diese Weise erstreckt sich keine Klebemasse 12, 22, 24 nach außen, eine Verschmutzung ist ausgeschlossen.

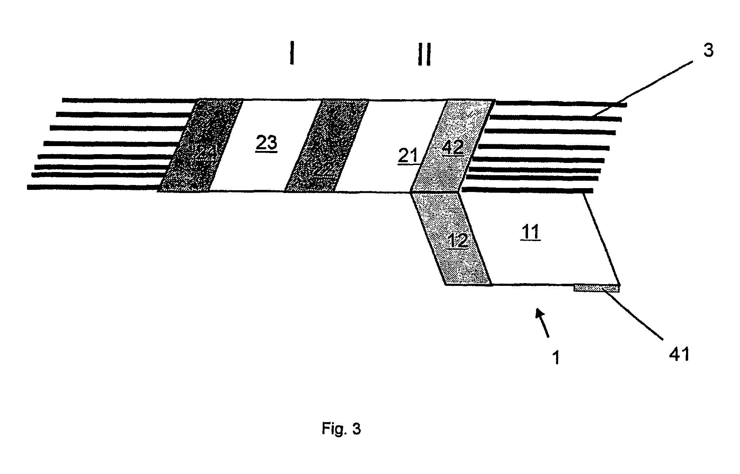

In der Figur 3 ist ein weiterer Ausschnitt eines Kabelbaums 3 gezeigt, der erfindungsgemäß mit einem Klebeband 1 ummantelt ist. Das Klebeband 1 weist eine beidseitige schmale Beschichtung 12, 41 eines Klebers auf, und zwar derart, daß die eine Klebemasse 41 an der einen Kante des Trägermaterial anliegt und auf der anderen Seite des Trägermaterials die Klebemasse 12 an der gegenüberliegenden Kante angeordnet ist.
Durch das Umwickeln des Kabelbaums 3 werden die Klebemasseabschnitte 12, 42 zusammengefügt, so daß eine besonders feste Verbindung zustande kommt.

## Patentansprüche

1. Verfahren zum Ummanteln von langgestrecktem Gut, wie insbesondere Kabelsätzen, mit einem Klebeband, das in einer spiralförmigen Bewegung um das langgestreckte Gut geführt wird, wobei zumindest auf einer Seite des Trägermaterials des Klebebands die Klebemasse in Längsrichtung in Form eines Streifens aufgebracht ist, der eine geringere Breite aufweist als das Trägermaterial des Klebebands,
**dadurch gekennzeichnet, dass**
das Trägermaterial ein textiler Träger, ein Laminat oder ein Folie und
die Klebemasse ein Acrylatsystem ist.

2. Verfahren nach Anspruch 1, **dadurch gekennzeichnet, dass** das Klebeband so um das Gut geführt wird, dass bezogen auf die Mittelachse des Gutes die Klebemasse innenwärts liegt.

3. Verfahren nach Anspruch 1, **dadurch gekennzeichnet, dass** das Klebeband so um das Gut geführt wird, dass bezogen auf die Mittelachse des Gutes die Klebemasse außenwärts liegt.

4. Verfahren nach den Ansprüchen 1 bis 3, **dadurch gekennzeichnet, dass** das Klebeband einseitig mit einer druckempfindlichen Klebemasse beschichtet ist.

5. Verfahren nach Anspruch 1, **dadurch gekennzeichnet, dass** das Klebeband auf der Rückseite des Trägermaterials mit einer weiteren Klebeschicht ausgerüstet ist, die versetzt zur Beschichtung der Gegenseite angebracht ist.

6. Verfahren nach Anspruch 5, **dadurch gekennzeichnet, dass** das Klebeband entsteht, indem die Klebemasseseiten zweier einseitig insbesondere vollflächig beschichteter Klebebänder mit Versatz aufeinander laminiert werden.

7. Verfahren nach den Ansprüchen 1 bis 6, **dadurch gekennzeichnet, dass** die Ummantelung des Kabelbaums derartig erfolgt, dass der Streifen der Klebemasse weitgehend vollständig auf dem Klebeband selbst verklebt.

8. Verfahren nach den Ansprüchen 1 bis 7, **dadurch gekennzeichnet, dass** als Trägermaterial für das Klebeband Vliese verwendet werden, die insbesondere durch ein Übemähen mit separaten Fäden oder durch ein Vermaschen oder Wasserstrahlen oder Nadeln verfestigt sind.

9. Verfahren nach den Ansprüchen 1 bis 8, **dadurch gekennzeichnet, dass** das Klebeband eine Breite von 10 bis 100 mm aufweist, insbesondere von 15 bis 50 mm.

## Claims

1. Method of wrapping elongate product, especially cable harnesses, with an adhesive tape which is passed in a helical movement around the elongate product, the adhesive composition being applied, on at least one side of the backing material of the adhesive tape, lengthwise in the form of a strip whose width is lower than that of the backing material of the adhesive tape, **characterized in that** the backing product is a textile backing, a laminate or a film, and the adhesive composition is an acrylate system.

2. Method according to Claim 1, **characterized in that** the adhesive tape is passed around the product in such a way that the adhesive composition is on the inside relative to the centre axis of the product.

3. Method according to Claim 1, **characterized in that** the adhesive tape is passed around the product in such a way that the adhesive composition is on the outside relative to the centre axis of the product.

4. Method according to any of Claims 1 to 3, **characterized in that** the adhesive tape is coated on one side with a pressure-sensitive adhesive composition.

5. Method according to Claim 1, **characterized in that** the adhesive tape is provided on the reverse of the backing material with a further adhesive film which is offset with respect to the coating on the opposite side.

6. Method according to Claim 5, **characterized in that** the adhesive tape is formed by laminating the adhesive-composition sides of two single-sidedly coated adhesive tapes, coated in particular over their full area, onto one another with an offset.

7. Method according to any of Claims 1 to 6, **characterized in that** the cable harness is wrapped in such a way that the strip of adhesive composition bonds substantially completely to the adhesive tape itself.

8. Method according to any of Claims 1 to 7, **characterized in that** backing material used for the adhesive tape comprises nonwoven webs consolidated in particular by overstitching with separate threads or by interlooping or waterjets or needles.

9. Method according to any of Claims 1 to 8, **characterized in that** the adhesive tape has a width of from 10 to 100 mm, in particular from 15 to 50 mm.

## Revendications

1. Procédé pour envelopper un élément allongé, en particulier un faisceau de câbles, avec une bande adhésive, laquelle est guidée dans un mouvement spiroïdal autour de l'élément allongé, la masse adhésive étant appliquée dans le sens longitudinal sous la forme d'un ruban d'un côté au moins du matériau de support de la bande adhésive, lequel ruban présente une largeur inférieure à celle du matériau de support de la bande adhésive, **caractérisé en ce que** le matériau de support est un support textile, un matériau laminé ou un film et **en ce que** la masse adhésive est un système acrylate.

2. Procédé selon la revendication 1, **caractérisé en ce que** la bande adhésive est guidée autour de l'élément, de telle sorte que la masse adhésive se trouve à l'intérieur par rapport à l'axe médian de l'élément.

3. Procédé selon la revendication 1, **caractérisé en ce que** la bande adhésive est guidée autour de l'élément, de telle sorte que la masse adhésive se trouve à l'extérieur par rapport à l'axe médian de l'élément.

4. Procédé selon les revendications 1 à 3, **caractérisé en ce que** la bande adhésive est revêtue d'un côté d'une masse adhésive sensible à la pression.

5. Procédé selon la revendication 1, **caractérisé en ce que** la bande adhésive est pourvue du côté arrière du matériau de support d'une autre couche de masse adhésive, laquelle est appliquée de façon décalée par rapport au revêtement du côté opposé.

6. Procédé selon la revendication 5, **caractérisé en ce que** la bande adhésive est obtenue en laminant l'un sur l'autre de façon décalée les côtés pourvus de la masse adhésive de deux bandes adhésives revêtues d'un côté en particulier sur toute la surface.

7. Procédé selon les revendications 1 à 6, **caractérisé en ce que** l'enveloppement du faisceau de câbles a lieu de telle sorte que le ruban de la masse adhésive adhère lui-même largement complètement à la bande adhésive.

8. Procédé selon les revendications 1 à 7, **caractérisé en ce que** des non-tissés, lesquels sont renforcés en particulier par une surpiqûre avec des fils séparés ou par un maillage ou au moyen de jets d'eau ou par aiguilletage, sont utilisés comme matériau de support pour la bande adhésive.

9. Procédé selon les revendications 1 à 8, **caractérisé en ce que** la bande adhésive présente une largeur de 10 jusqu'à 100 mm, en particulier de 15 jusqu'à 50 mm.
